# EUROPÄISCHE PATENTANMELDUNG

(11) **EP 2 689 659 A2**
(43) Veröffentlichungstag der Anmeldung: **29.01.2014**
(21) Anmeldenummer: 13003681.7
(22) Anmeldetag: 23.07.2013
(51) Int. Cl.: A01K 1/015

(54) **Beheizbare Bodenplatte**

(30) Priorität: 23.07.2012 DE 102012014510
(71) Anmelder: MIK INTERNATIONAL AG, 59457 Werl (DE)
(72) Erfinder: Ertel de Jesus Passadouro, Thomas, 37603 Holzminden (DE)
(74) Vertreter: Behrendt, Arne

(57) **Zusammenfassung**

Beheizbare Bodenplatte mit einem Hohlraum (1), der mit einem flüssigen Wärmeträgermedium befüllt ist und durch den ein metallisches Heizrohr (4) verläuft, das mit einem wärmeübertragenden Füllmedium befüllt ist, wobei das Heizrohr einen Widerstandsheizdraht aufweist, der von einer wärmeübertragenden, elektrischen Isolierschicht umgeben ist und wobei das Füllmedium in dem Ringraum des Heizrohres ebenfalls ein flüssiges Wärmeträgermedium ist.

## Beschreibung

Die Erfindung betrifft eine beheizbare Bodenplatte für einen Stallboden, insbesondere für einen Ferkelstall, bestehend aus einem plattenförmigen, einen Hohlraum ausbildenden Plattenkörper, dessen Oberseite als Liegefläche für die Tiere ausgebildet ist und durch dessen mit einem flüssigen Wärmeträgermedium befüllten Hohlraum mindestens ein metallisches Heizrohr verläuft, wobei im Inneren des Heizrohrs ein Widerstandsheizdraht verläuft und der Ringraum zwischen dem Widerstandsheizdraht und der Wand des metallischen Heizrohrs mit einem wärmeübertragenden Füllmedium befüllt ist. Zweck der beheizbaren Bodenplatten ist es, dass Ferkel keine Wärme bei ihrem Muttertier suchen. In vielen Zuchtbetrieben hat sich das Problem gezeigt, dass ausgewachsene Sauen mit einem Gewicht von ca. 200 kg beim Hinlegen häufig die eigenen Ferkel erdrücken, deren Geburtsgewicht ca. 1,4 kg beträgt. Um diesem Problem zu begegnen, hat man wärmeausstrahlende Bodenplatten in Zuchtbetrieben eingeführt.

Beheizbare Bodenplatten der genannten Art sind beispielsweise aus dem deutschen Gebrauchsmuster DE 20 2008 014 958 U1 bekannt. Diese Bodenplatten werden dadurch beheizt, dass der Ringraum zwischen dem Widerstandsheizdraht und der Wand des metallischen Heizrohrs mit einem Isolierstoff ausgefüllt ist, der eine erhöhte Wärmeleitfähigkeit hat. Dabei besteht der Isolierstoff aus kristallinen Silikaten, Quarz oder Siliziumcarbid.

Vorteilhaft an den vorbekannten beheizbaren Bodenplatten ist, dass der Plattenkörper keinen direkten, schädigenden Temperatureinfluss erfährt, da die Wärme über das Heizrohr an das flüssige Wärmeträgermedium abgegeben wird. Das flüssige Wärmeträgermedium dient einerseits als Wärmeübertragungsmedium durch Konvektion und andererseits als Wärmespeicher, wodurch sich die Tiere auch nach Abschaltung der externen Wärmequelle bis zum Abkühlen des flüssigen Wärmeträgermediums an der Oberseite der Liegefläche wärmen können.

Die vorbekannten beheizbaren Bodenplatten haben jedoch den Nachteil, dass sie eine unzureichend gleichmäßige Wärmeverteilung an der Oberseite der Liegefläche aufweisen. Dies ist mit der eingeschränkten Möglichkeit der Wärmeverteilung zu begründen, da die Silikate die Wärme mittels Wärmeübertragung an den sich stark aufheizenden Heizrohrmantel abgeben. Die Wärme des überhitzten Heizrohres verteilt sich unzureichend im flüssigen Wärmeträgermedium des Hohlraums und lässt somit an der Oberseite der Liegefläche zu stark erwärmte Flächenbereiche entstehen.

Es ist deshalb Aufgabe der Erfindung, eine beheizbare Bodenplatte der eingangs genannten Art zu schaffen, die eine weitestgehend gleichmäßige Wärmeverteilung an der Oberseite der Liegefläche für die Tiere aufweist. Zudem soll die beheizbare Bodenplatte ein hohes Maß an Sicherheit bieten, so dass den Tieren kein Schaden widerfahren kann.

Zur Lösung dieser Aufgabe schlägt die Erfindung ausgehend von einer beheizbaren Bodenplatte der eingangs genannten Art vor, dass der Widerstandheizdraht von einer wärmeübertragenden, elektrischen Isolierschicht umgeben ist und dass das Füllmedium in dem Ringraum des Heizrohres ebenfalls ein flüssiges Wärmeträgermedium ist.

Die den Widerstandsheizdraht umgebende, wärmeübertragende und elektrische Isolierschicht verhindert, dass das flüssige Wärmeträgermedium zu einem elektrischen Leiter wird. Sollte das flüssige Wärmeträgermedium aus der beheizbaren Bodenplatte ausfließen, ist die Wahrscheinlichkeit, dass die Tiere einen elektrischen Schlag erhalten, bestmöglich reduziert. Das flüssige Wärmeträgermedium in dem Heizrohr weist hinsichtlich der Wärmeübertragung günstige Eigenschaften auf, da die Wärmeverteilung im Ringraum des Heizrohres gleichmäßiger als bei festen Silikaten erfolgt und somit eine Überhitzung des Heizrohrmantels gegenüber den ihn umgebenden Medien verhindert wird. Durch die elektrische Isolierung des Widerstandsheizdrahtes ist somit die gleiche elektrische Isolierung wie bei den herkömmlich genutzten Silikaten gegeben, wobei die Wärmeübertragung deutlich verbessert ist.

Besonders vorteilhafte Eigenschaften stellen sich ein, wenn das flüssige Wärmeträgermedium in dem befüllten Hohlraum und das Füllmedium in dem Heizrohr identisch sind. Durch die Summe der gemeinsamen Eigenschaften, wie die molare Masse, Dichte, Siedepunkt, spezifische Wärmekapazität, Wärmeleitfähigkeit oder Viskosität, lässt sich die Wärmeübertragung gut einstellen. Durch die gleiche Wärmeausdehnung oder auch den PH-Wert wirken die gleichen Einflussgrößen auf die Komponenten der beheizbaren Bodenplatte. Dieses Merkmal unterstützt die Vereinheitlichung der verwendeten Werkstoffe.

Eine bevorzugte Ausführungsform sieht vor, dass das flüssige Wärmeträgermedium Wasser oder wasserenthaltende Flüssigkeiten ist. Bei Wasser handelt es sich um ein sehr günstiges und überall vorkommendes Medium. Bei der Einrichtung eines Ferkelstalls muss das Wasser nicht mitgeliefert werden, sondern kann direkt vor Ort aufgefüllt werden. Dies hat einen besonders positiven Einfluss auf den reduzierten Transportumfang und damit auf die Transportkosten.

Weitere Vorteile ergeben sich, wenn das Heizrohr als Wellrohr mit ringförmigen Wandeinformungen oder als Drallrohr mit helikal verlaufenden Wandeinformungen ausgebildet ist. Eine derartige Ausbildung des Heizrohrs hat zunächst den Vorteil, dass die der Wärmeübertragung dienende Oberfläche des Heizrohrs erheblich vergrößert wird. Außerdem kommt man bei Verwendung eines Wellrohrs oder Drallrohrs mit erheblich geringeren Wandstärken aus, das ebenfalls den Wärmeübergang in das flüssige Wärmeübertragungsmedium im Hohlraum der Bodenplatte erleichtert. Trotz der sehr geringen Wandstärke behält ein Wellrohr oder ein Drallrohr besser die geforderte Steifigkeit, und zwar auch dann, wenn es innerhalb des innerhalb des Hohlraums um einen Biegeradius gebogen wird. Außerdem kommt es im Biegebereich nicht zu Einschnürungen des Durchströmungsquerschnitts, wie dies bei glatten Metallrohren zu befürchten wäre.

Im Ergebnis ist ein metallisches Wellrohr oder Drallrohr wesentlich flexibler, wodurch die Handhabung beim Einbringen in den Hohlraum des Plattenkörpers erleichtert wird. Die Verwendung eines Wellrohrs oder Drallrohrs als Heizrohr bietet also auch Vorteile bei der Herstellung der beheizbaren Bodenplatten.

Eine weitere besonders bevorzugte Ausführungsform besteht darin, dass das Heizrohr eine oder mehrere Öffnungen aufweist, über die der Ringraum des Heizrohres mit dem Hohlraum der Bodenplatte in Verbindung steht. Dadurch tritt das innere flüssige Wärmeträgermedium im Heizrohr mit dem äußeren flüssigen Wärmeträgermedium im Hohlraum der beheizbaren Bodenplatte in Verbindung. Im nicht erhitzten Zustand würden sich beide Wärmeträgermedien nach ausreichender Zeit aufgrund von Konzentrationsgefällen mischen. Wird jedoch die externe Wärmequelle aktiviert, erhitzt sich das Heizrohr und das darin befindliche Wärmeträgermedium. In Folge von Konvektion gerät das Wärmeträgermedium in Bewegung und fließt durch die Öffnung bzw. Öffnungen. Dies bedeutet, dass durch die Öffnungen zwangsweise eine Mischung der Wärmeträgermedien geschieht, wodurch sich ein einheitliches Wärmeträgermedium einstellt. Durch die Konvektionsströme verteilt sich das Wärmeträgermedium gleichmäßig im Hohlraum der beheizbaren Bodenplatte. Die Erwärmung geschieht neben der herkömmlichen Wärmeübertragung somit zusätzlich über die Konvektion des flüssigen Wärmeträgermediums. Dies hat besonders vorteilhafte Auswirkungen auf die Oberseite der Liegefläche, da hier keine Temperaturunterschiede mehr feststellbar sind. Dies verhindert zusätzlich eine Überhitzung der Tiere an den nicht mehr vorliegenden Stellen auf der Oberseite der Liegefläche mit Spitzentemperaturen.

Zur Reduzierung der Luftblasen in der beheizbaren Bodenplatte sieht die Erfindung vor, dass die Bodenplatte rechteckig ausgebildet ist und dass im Bereich von einer Ecke eine Befüllöffnung mit Entlüftung vorgesehen ist, wobei Öffnungen im Heizrohr sowohl in unmittelbarer Nähe der Befüllöffnung mit Entlüftung als auch so weit wie möglich von der Befüllöffnung mit Entlüftung entfernt angeordnet sind. Zum Befüllen wird die Bodenplatte derart geneigt, dass die Befüllöffnung mit Entlüftung gegenüber dem Boden den höchstmöglichen Punkt einnimmt. Das flüssige Wärmeträgermedium gelangt in den Hohlraum der Bodenplatte und füllt diese naturgemäß von unten nach oben auf. Dabei gelangt das flüssige Wärmeträgermedium sowohl in den Hohlraum, als auch über die so weit wie möglich von der Befüllöffnung mit Entlüftung entfernt angeordneten Öffnungen in das Heizrohr. Die beim Befüllen durch das flüssige Wärmeträgermedium verdrängte Luft entweicht über die in unmittelbarer Nähe der Befüllöffnung mit Entlüftung liegende Öffnung aus dem Heizrohr in den Hohlraum und von diesem über die Entlüftung der Befüllöffnung aus der Bodenplatte. Somit wird verhindert, dass nach dem Befüllen Luftblasen in dem Heizrohr oder in der Bodenplatte zurückbleiben.

Die Sicherheit der gesamten Konstruktion wird wesentlich erhöht, indem das Heizrohr im Inneren des Hohlraums des Plattenkörpers mit Abstand zum Boden des Plattenkörpers angeordnet ist. Hierdurch wird sichergestellt, dass das Heizrohr nicht mit dem Material des Plattenkörpers unmittelbar in Berührung kommt und dass zwischen der Außenseite des Heizrohres und dem Boden der Platte immer ausreichende Durchtrittsquerschnitte verbleiben, durch welche das Wärmeübertragungsmedium frei hindurchströmen kann. Dieser freie Querschnitt wird durch die Welligkeit des Wellenrohres bzw. Drallrohres noch verbessert.

Ein Verfahren zum Befüllen einer beheizbaren Bodenplatte für einen Stallboden, insbesondere für einen Ferkelstall, bestehend aus einem plattenförmigen, einen Hohlraum ausbildenden Plattenkörper, dessen Oberseite als Liegefläche für die Tiere ausgebildet ist und durch dessen mit einem flüssigen Wärmeträgermedium befüllten Hohlraum mindestens ein metallisches Heizrohr verläuft, wobei im Inneren des Heizrohrs ein Widerstandsheizdraht verläuft und der Ringraum zwischen dem Widerstandsheizdraht und der Wand des metallischen Heizrohrs mit einem wärmeübertragenden Füllmedium gefüllt ist sieht vor, dass beim Befüllen des Hohlraums zugleich das Heizrohr befüllt wird, wobei die beheizbare Bodenplatte während des Befüllens derart geneigt ist, dass die beim Befüllen verdrängte Luft den kürzesten Weg zu einer Befüllöffnung mit Entlüftung zurücklegt.

Dies bedeutet eine enorme Vereinfachung für die Herstellung des Gebrauchszustandes der beheizbaren Bodenplatte. Durch den Einsatz eines einzigen Wärmeträgermediums verkürzt und vereinfacht sich die Einleitung in den Gebrauchszustand. Das Risiko von zusätzlichen Luftblasen wird reduziert, da es sich um einen einzigen Befüllungsvorgang handelt und nicht mehr um getrennte Vorgänge für das Heizrohr und den Hohlraum der beheizbaren Bodenplatte. Zusätzlich kann die durch das Wärmeträgermedium verdrängte Luft sofort aus der Befüllöffnung mit Entlüftung entweichen. Da Luft stets senkrecht nach oben steigt, kann durch die entsprechende Neigung der beheizbaren Bodenplatte, bei der die Befüllöffnung mit Entlüftung den höchstmöglichen Punkt einnimmt, vermieden werden, dass Luftblasen in der Bodenblatte zurückbleiben.

Ein bevorzugtes Verfahren zum Befüllen der beheizbaren Bodenplatte besteht darin, dass die beheizbare Bodenplatte über die Befüllöffnung mit Entlüftung mit dem flüssigen Wärmeträgermedium befüllt wird. Dies ermöglicht einen schnellen Befüllungsprozess, da die verdrängte Luft nicht durch die Befüllung am Austritt aus der Bodenplatte gehindert wird. Zusätzlich werden Wasserspritzer außerhalb der Bodenplatte durch aufsteigende und wasserverdrängende Luftblasen verhindert. Zum Befüllen wird die beheizbare Bodenplatte derart hochkant positioniert, dass die Befüllöffnung mit Entlüftung den höchstmöglichen Punkt einnimmt, sodass eventuelle Luft aus der beheizbaren Bodenplatte entweichen kann.

Die Erfindung umfasst schließlich die Verwendung einer beheizbaren Bodenplatte, insbesondere für einen Ferkelstall, bestehend aus einem plattenförmigen, einem hohlraumausbildenden Plattenkörper, dessen Oberseite als Liegefläche für die Tiere ausgebildet ist und durch dessen mit einem flüssigen Wärmeträgermedium befüllten Hohlraum mindestens ein metallisches Heizrohr verläuft, wobei im Inneren des Heizrohrs eine Widerstandsheizdraht verläuft und der Ringraum zwischen dem Widerstandsheizdraht und der Wand des metallischen Heizrohrs mit einem wärmeübertragenden Füllmedium befüllt ist, wobei der Widerstandheizdraht von einer wärmeübertragenden, elektrischen Isolierschicht umgeben ist, wobei das Füllmedium in dem Ringraum des Heizrohres ebenfalls ein flüssiges Wärmeträgermedium ist und wobei die Oberseite der Liegefläche eine gleichmäßige Temperaturverteilung aufweist. Dies ist im Sinne des Verwendungszwecks eine Notwendigkeit, da sich die Tiere bevorzugt auf den beheizbaren Bodenplatten hinlegen sollen, um sich zu wärmen. Herkömmliche mit Heizstäben beheizte Bodenplatten haben das Problem, dass sie an der Oberseite an der Liegefläche entlang der Heizstäbe häufig Temperaturmaxima hatten, die den Tieren unter Umständen schaden können. Heizmatten bieten zwar eine gleichmäßige Temperaturverteilung, allerdings keine Wärmespeicherung, sodass die Bodenplatten kurz nach Ausschalten der Heizplatten erkalten. Demgegenüber kann ein flüssiges Wärmeträgermedium die Temperatur länger und gleichmäßig abgeben.

Ausführungsbeispiele der Erfindung werden im Folgenden an Hand der Zeichnung näher erläutert. Es zeigen:
- Fig. 1:: Schematische Draufsicht auf die Bodenplatte nach Lehre der Erfindung;
- Fig. 2:: Schnittdarstellung durch die Bodenplatte mit Wellrohr nach Lehre der Erfindung.

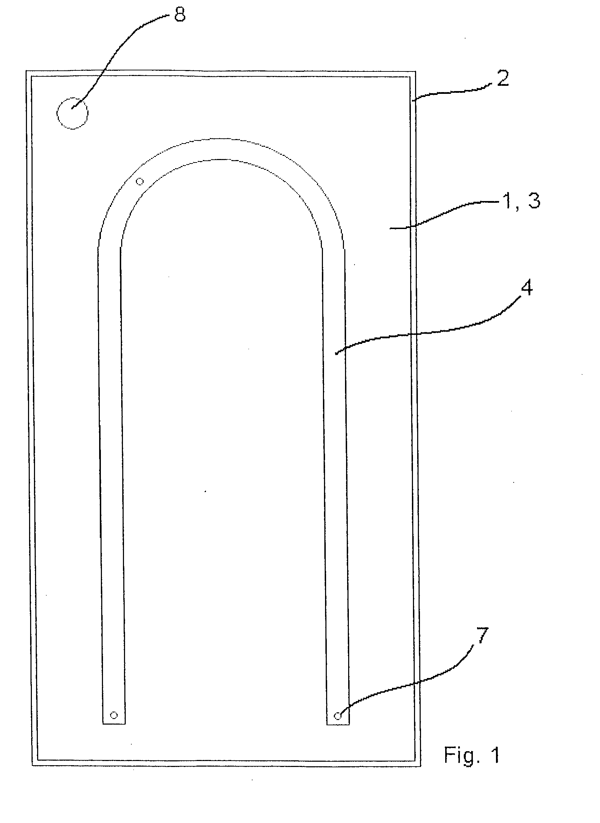

Figur 1 zeigt eine schematische Darstellung der beheizbaren Bodenplatte. Deutlich erkennbar fügt sich das Heizrohr 4 U-förmig in den Hohlraum 1, der mit einem flüssigen Wärmeträgermedium 3 gefüllt ist. Die Konstruktion ist von dem Plattenkörper 2 umgeben. Die Öffnungen 7 ermöglichen den Wasseraustausch zwischen dem Heizrohr 4 und den ihn umgebenden Hohlraum 1, der mit Wasser 3 befüllt ist. Der Wasseraustausch geschieht in Folge von Konvektion an den Öffnungen 7. Die Wasserbefüllung erfolgt über die Befüllöffnung mit Entlüftung 8. Der Plattenkörper 2 der beheizbaren Bodenplatte besteht aus Kunststoff, insbesondere aus Polyethylen oder Polypropylen.

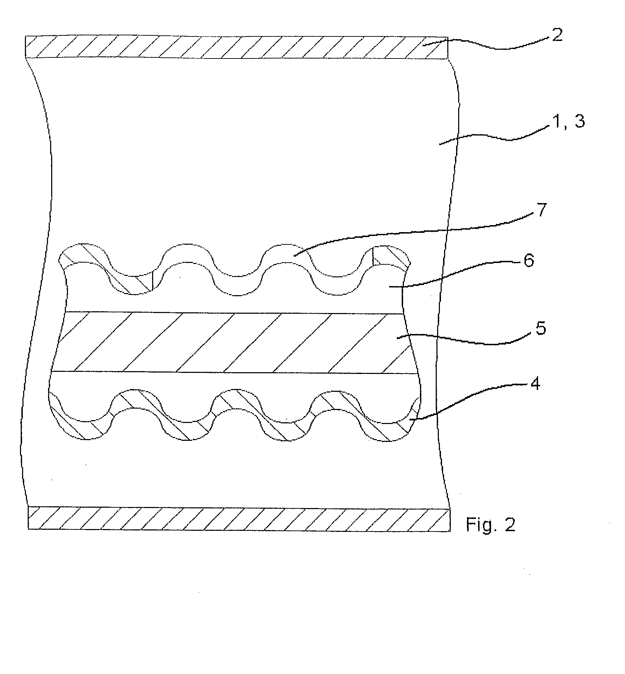

Die Figur 2 zeigt eine Darstellung der Bodenplatte, die das Zusammenspiel zwischen Heizrohr 4 und Hohlraum 1 zeigen soll. Das Füllmedium 6, in diesem Ausführungsbeispiel Wasser, wird über den Widerstandsheizdraht 5 erhitzt und gelangt über die Öffnung 7 per Konvektion in den Hohlraum 1, in dem sich das noch nicht erhitzte Wärmeträgermedium 3, in diesem Ausführungsbeispiel Wasser, befindet. Die gesamte Konstruktion wird von dem Platten körper 2 umgeben.

## Patentansprüche

1. Beheizbare Bodenplatte für einen Stallboden, insbesondere für einen Ferkelstall, bestehend aus einem plattenförmigen, einen Hohlraum (1) ausbildenden Plattenkörper (2), dessen Oberseite als Liegefläche für die Tiere ausgebildet ist und durch dessen mit einem flüssigen Wärmeträgermedium (3) befüllten Hohlraum (1) mindestens ein metallisches Heizrohr (4) verläuft, wobei im Inneren des Heizrohrs (4) ein Widerstandsheizdraht (5) verläuft und der Ringraum zwischen dem Widerstandsheizdraht (5) und der Wand des metallischen Heizrohrs (4) mit einem wärmeübertragenden Füllmedium (6) befüllt ist,
**dadurch gekennzeichnet, dass** der Widerstandheizdraht (5) von einer wärmeübertragenden, elektrischen Isolierschicht umgeben ist und dass das Füllmedium (6) in dem Ringraum des Heizrohres (4) ebenfalls ein flüssiges Wärmeträgermedium ist.

2. Beheizbare Bodenplatte nach Anspruch 1, **dadurch gekennzeichnet, dass** das flüssige Wärmeträgermedium (3) in dem befüllten Hohlraum (1) und das Füllmedium (6) in dem Heizrohr (4) identisch sind.

3. Beheizbare Bodenplatte nach einem der vorgenannten Ansprüche, **dadurch gekennzeichnet, dass** das flüssige Wärmeträgermedium (3) Wasser oder Wasser enthaltende Flüssigkeiten ist.

4. Beheizbare Bodenplatte nach einem der Ansprüche 1 bis 3, **dadurch gekennzeichnet, dass** das Heizrohr (4) als Wellrohr mit ringförmigen Wandeinformungen ausgebildet ist.

5. Beheizbare Bodenplatte nach einem der Ansprüche 1 bis 3, **dadurch gekennzeichnet, dass** das Heizrohr (4) als Drallrohr mit helikal verlaufenden Wandeinformungen ausgebildet ist.

6. Beheizbare Bodenplatte nach Anspruch 1, **dadurch gekennzeichnet, dass** das Heizrohr (4) eine oder mehrere Öffnungen (7) aufweist, über die der Ringraum des Heizrohres (4) mit dem Hohlraum (1) der Bodenplatte in Verbindung steht.

7. Beheizbare Bodenplatte nach Anspruch 6, **dadurch gekennzeichnet, dass** die Bodenplatte rechteckig ausgebildet ist und dass im Bereich von einer Ecke eine Befüllöffnung mit Entlüftung (8) vorgesehen ist, wobei Öffnungen (7) im Heizrohr (4) sowohl in unmittelbarer Nähe der Befüllöffnung mit Entlüftung (8) als auch so weit wie möglich von der Befüllöffnung mit Entlüftung (8) entfernt angeordnet sind.

8. Beheizbare Bodenplatte nach einem der vorgenannten Ansprüche, **dadurch gekennzeichnet, dass** das Heizrohr (4) im Inneren des Hohlraum (1) des Plattenkörpers (2) mit Abstand zum Boden des Plattenkörpers (2) angeordnet ist.

9. Verfahren zum Befüllen einer beheizbaren Bodenplatte für einen Stallboden, insbesondere für einen Ferkelstall, bestehend aus einem plattenförmigen, einen Hohlraum (1) ausbildenden Plattenkörper (2), dessen Oberseite als Liegefläche für die Tiere ausgebildet ist und durch dessen mit einem flüssigen Wärmeträgermedium (3) befüllten Hohlraum (1) mindestens ein metallisches Heizrohr (4) verläuft, wobei im Inneren des Heizrohrs (4) ein Widerstandsheizdraht (5) verläuft und der Ringraum zwischen dem Widerstandsheizdraht (5) und der Wand des metallischen Heizrohrs (4) mit einem wärmeübertragenden Füllmedium (6) befüllt ist, **dadurch gekennzeichnet, dass** beim Befüllen des Hohlraums (1) zugleich das Heizrohr (4) befüllt wird, wobei die beheizbare Bodenplatte während des Befüllens derart geneigt ist, dass die beim Befüllen verdrängte Luft den kürzesten Weg zu einer Befüllöffnung mit Entlüftung (8) zurücklegt.

10. Verfahren nach Anspruch 9, **dadurch gekennzeichnet, dass** die beheizbare Bodenplatte über die Befüllöffnung mit Entlüftung (8) mit dem flüssigen Wärmeträgermedium (3) befüllt wird.

11. Verwendung einer beheizbaren Bodenplatte für einen Stallboden, insbesondere für einen Ferkelstall, bestehend aus einem plattenförmigen, einen Hohlraum (1) ausbildenden Plattenkörper (2), dessen Oberseite als Liegefläche für die Tiere ausgebildet ist und durch dessen mit einem flüssigen Wärmeträgermedium (3) befüllten Hohlraum (1) mindestens ein metallisches Heizrohr (4) verläuft, wobei im Inneren des Heizrohrs (4) ein Widerstandsheizdraht (5) verläuft und der Ringraum zwischen dem Widerstandsheizdraht (5) und der Wand des metallischen Heizrohrs (4) mit einem wärmeübertragenden Füllmedium (6) befüllt ist, **dadurch gekennzeichnet, dass** der Widerstandheizdraht (5) von einer wärmeübertragenden, elektrischen Isolierschicht umgeben ist, dass das Füllmedium (6) in dem Ringraum des Heizrohres (4) ebenfalls ein flüssiges Wärmeträgermedium ist und dass die Oberseite der Liegefläche eine gleichmäßige Temperaturverteilung aufweist.
